# EUROPÄISCHE PATENTSCHRIFT

(11) **EP 2 598 345 B1**
(45) Veröffentlichungstag und Bekanntmachung des Hinweises auf die Patenterteilung: **07.03.2018**
(21) Anmeldenummer: 11726758.3
(22) Anmeldetag: 17.06.2011
(51) Int. Cl.: B60C 9/00, B60C 9/22, B60C 9/18, D02G 3/48

(54) **FAHRZEUGLUFTREIFEN**
PNEUMATIC TIRE
PNEUMATIQUE DE VÉHICULE

(30) Priorität: 30.07.2010 DE 102010036760
(43) Veröffentlichungstag der Anmeldung: 05.06.2013
(73) Patentinhaber: Continental Reifen Deutschland GmbH, 30165 Hannover (DE)
(72) Erfinder: FIDAN, Sadettin, 30827 Garbsen (DE); REESE, Wolfgang, 31228 Peine (DE)
(74) Vertreter: Finger, Karsten
(86) Internationale Anmeldenummer: PCT/EP2011/060083
(87) Internationale Veröffentlichungsnummer: WO 2012/013420

(56) Entgegenhaltungen:
- EP-A1- 1 671 813
- EP-A1- 2 033 811
- EP-A2- 1 491 365
- WO-A1-98/56601
- WO-A1-2010/094357
- WO-A2-2009/123413

## Beschreibung

Die Erfindung betrifft einen Fahrzeugluftreifen radialer Bauart mit einem Laufstreifen, einer Radialkarkasse, einem Gürtelverband mit mindestens zwei Gürtellagen und mit zumindest einer Gürtelbandagenlage, die radial außerhalb des Gürtels angeordnet ist und durch ein kontinuierliches und spiralförmiges Wickeln eines PET-Kordes in der Umfangsrichtung des Reifens gebildet ist.

Ein derartiger Fahrzeugluftreifen ist beispielsweise aus der EP-B-1 671 813 bekannt. Für die Bandagenlagen wird ein PET-Kord verwendet, welcher eine Elastizitätsmodul von nicht weniger als 2,5 mN/dtex % unter einer Last von 29,4 N aufweist, gemessen bei 160°C. Darüber hinaus ist der Kord mit einer haftverbessernden Zusammensetzung behandelt, die ein thermoplastisches Polymer, ein hitzehärtbares, wässriges Polyuhrethanharz und eine Epoxydharzverbindung aufweist. Es ist ferner üblich, in den Bandagenlagen eines Fahrzeugluftreifens Nylonkorde, insbesondere PA 6.6, zu verwenden. Wegen des vergleichsweise geringen Zugmoduls von Nylonkorden ist es für bestimmte Anwendungsfälle, insbesondere wenn die Hochgeschwindigkeitshaltbarkeit des Reifens von Bedeutung ist, notwendig, zwei Bandagenlagen mit Nylonkorden als Festigkeitsträger vorzusehen. Die Hauptaufgabe von Bandagenlagen in Reifen ist es, Relativbewegungen an den seitlichen Gürtellagenkanten zu verhindern, um eine Separation der Gürtellagenkanten zu vermeiden.

Die WO 98/56601 A1 offenbart einen gattungsgemäßen Fahrzeugluftreifen radialer Bauart mit einem mehrlagigen, mit einer Gürtelbandage versehenen Gürtel, wobei in der Gürtelbandage Korde verwendet sind, die wahlweise aus Rayon, PET, Aramid oder PEN bestehen und in eine Gummierungsmischung eingebettet sind. Auch die EP 1 491 365 A2 offenbart Verstärkungskorde in der Gürtelbandage eines Fahrzeugluftreifens aus einem Polyester, insbesondere PEN oder PET. Die WO 2009/123413 A2 befasst sich mit einem speziellen PET-Kord für die Verwendung in der Gürtelbandage eines Fahrzeugluftreifens. Erwähnt ist, dass der PET-Kord bzw. die aus ihm bestehenden PET-Fasern einem Heatsetting-Prozess unterzogen werden und dass der PET-Kord eine Dehnung von 0,3 bis 1,7% bei einer Kraft von 2,0kg/2000d (2200 dtex) aufweisen kann.

Der Erfindung liegt die Aufgabe zugrunde, einen PET-Kord für die Bandagenlage(n) zur Verfügung zu stellen, welcher selbst bei etwaiger einlagiger Ausführung der Bandage sicherstellt, dass der Reifen eine gute Hochgeschwindigkeitshaltbarkeit, eine hohe Lebensdauer und einen verminderten Flatspoteffekt aufweist.

Gelöst wird die gestellte Aufgabe erfindungsgemäß dadurch, dass der PET-Kord bei einer Kraft von 1,56 cN/detx bei 20°C eine Dehnung von 3% bis 5 % und bei 160°C eine Dehnung von 7% bis 9 % aufweist,
wobei die Summe aus der Bruchdehnung des PET-Kordes und der Wärmeschrumpfung, ermittelt bei 180°C, bei einer Vorspannkraft von 0,01 cN/dtex und einer Wirkungsdauer von zwei Minuten, größer ist als 20 %,
und dass der PET-Kord eine Wärmeschrumpfung, ermittelt bei 180 °C, bei einer Vorspannkraft von 0,01 cN/dtex und einer Wirkungsdauer von zwei Minuten, größer als 2,5 % aufweist.

Eine mit einem derartigen PET-Kord versehene Bandagenlage im Fahrzeugluftreifen verhindert wirkungsvoll eine Gürtelkantenseparation, gewährleistet eine gute Hochgeschwindigkeitshaltbarkeit, und hohe Lebensdauer des Reifens und reduziert den Flatspoteffekt.

Einige Kordparameter sind besonders wesentlich, um das Erzielen dieser Effekte zu unterstützen. Von Bedeutung ist beispielweise die Gesamtfeinheit des Kordes, der erfindungsgemäße PET-Kord sollte eine Gesamtfeinheit zwischen 1000 dtex und 6000 dtex, insbesondere zwischen 1000 dtex und 2000 dtex, aufweisen. Des weiteren sollte der PET-Kord einen Kordtwist zwischen 80 tpm und 500 tpm, insbesondere zwischen 250 tpm und 400 tpm, aufweisen.

Bei einer Ausführungsvariante besteht der erfindungsgemäße PET-Kord aus einem einzigen Garn. Bei alternativen Ausführungsformen ist der PET-Kord aus mehreren Garnen zusammengesetzt.

Als besonders günstig für die Verhinderung einer Separation der Gürtellagenkanten, für eine gute Hochgeschwindigkeitshaltbarkeit und eine hohe Lebensdauer des Reifens hat sich eine Anordnung des erfindungsgemäßen PET-Kordes in der Bandagenlage mit 60 epdm bis 120 epdm, insbesondere mit 80 epdm bis 100 epdm, erwiesen. Dabei ist lediglich eine einzige Bandagenlage erforderlich.

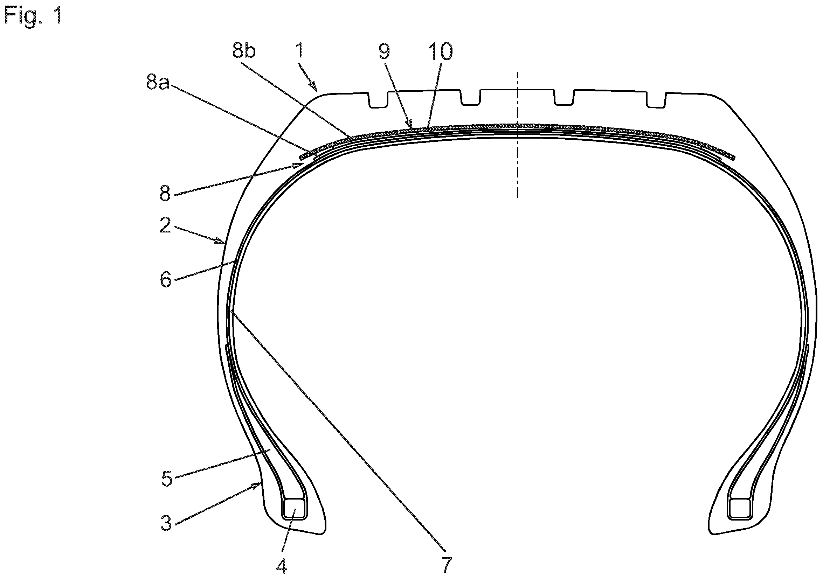

Weitere Merkmale, Vorteile und Einzelheiten der Erfindung werden nun anhand der Zeichnung, die ein Ausführungsbeispiel darstellt, näher beschrieben. Dabei zeigt die einzige Figur, Fig. 1, schematisch einen Querschnitt durch einen Fahrzeugluftreifen.

Der in Fig.1 gezeigte Fahrzeugluftreifen ist ein Reifen für Personenkraftwagen radialer Bauart und weist einen Laufstreifen 1, Seitenwände 2, Wulstbereiche 3 mit Wulstkernen 4 und Wulstprofilen 5, ferner eine Karkasslage 6, welche die beiden Wulstkerne 4 umläuft, eine Innenschicht 7 sowie eine zwischen der Karkasslage 6 und dem Laufstreifen 1 angeordneten Gürtelverband 8 auf. Der Gürtelverband 8 weist bei der gezeigten Ausführungsform zwei Gürtellagen 8a und 8b auf, welche in bekannter Weise aus in eine Gummimischung eingebetteten, parallel zueinander verlaufenden Festigkeitsträgern aus Stahlkord bestehen können. Die Stahlkorde in der einen Gürtellage 8a verlaufen dabei gekreuzt zu den Stahlkorden in der anderen Gürtellage 8b und schließen mit der Reifenumfangsrichtung einen der üblichen Winkel in der Größenordnung von 20° bis 25° ein. Radial außerhalb der beiden Gürtellagen 8a, 8b befindet sich eine Bandagenlage 9 - eine cap-ply Lage - welche durch kontinuierliches und spiralförmiges Wickeln eines Kordes 10 aus PET (Polyethylenterephtalat) in Umfangsrichtung des Reifens gebildet wird und die seitlichen Randkanten des Gürtelverbandes 8 überdeckt.

Gemäß der Erfindung wird ein PET-Kord 10 verwendet, welcher folgende Eigenschaften aufweist. Unter der Wirkung einer Kraft von 1,56 cN/dtex, bei einer Temperatur von 20°C, ist die Dehnung des Kordes 10 zwischen 3% und 5 %, bei einer Temperatur von 160°C zwischen 7% und 9 %. Bei einer über einen Zeitraum von zwei Minuten und bei einer Temperatur von 180°C wirkenden Vorspannkraft von 0,01 cN/dtex ist die Summe aus Bruchdehnung und Wärmeschrumpfung größer als 20 %. Des weiteren ist die Wärmeschrumpfung bei 180°C und unter der Wirkung einer Vorspannkraft von 0,01 cN/dtex, Wirkdauer zwei Minuten, größer als 2,5 %.

Der erfindungsgemäße PET-Kord 10 kann aus einem oder aus mehreren Garnen bestehen und weist eine Gesamtfeinheit zwischen 1000 dtex und 6000 dtex, insbesondere bis zu 2000 dtex, auf. Insbesondere wird ein PET-Kord 10 aus einem Garn mit einem Kordtwist zwischen 80 und 500 tpm (Turns pro Meter), insbesondere zwischen 250 tpm und 400 tpm, verwendet.

Der gegenseitige Abstand beim Wickeln des PET-Kordes 10 zum Bilden der Gürtelbandage wird derart eingestellt, dass in der fertigen Bandagenlage zwischen 60 und 120 epdm (ends per decimeter) vorliegen. Bei einer bevorzugten Ausführungsform der Erfindung weist die Bandagenlage 9 zwischen 80 epdm und 100 epdm auf.

Ein Reifen mit einer einzigen erfindungsgemäß ausgeführten Bandagenlage 9 weist eine Hochgeschwindigkeitshaltbarkeit auf, welche mit Reifen mit bekannten zweilagigen Ausführungen der Bandage mit Nylon 6.6 als Festigkeitsträger vergleichbar ist. Ein weiterer vorteilhafter Effekt der erfindungsgemäßen Bandagenlage besteht in der besseren Absorption von stoßartig wirkenden Belastungen, ohne dass die Gefahr von Kordbrüchen in den Gürtellagen besteht. Gegenüber den üblicherweise eingesetzten Nylonkorden ist bei einem erfindungsgemäß ausgeführter Reifen der Flatspoteffekt (eine temporäre Verformung des Footprints des Reifens beim Parken) deutlich verringert.

Es wurden Reifen der Dimension 200/55 R16 91W mit einer zweilagigen Nylon-Bandagenlage mit Reifen gleicher Dimension mit einer einlagigen Bandage aus PET-Kord 10 gemäß der Erfindung verglichen. Bei den Reifen gemäß dem Stand der Technik wiesen die Bandagenlagen Korde aus Nylon 6.6, Aufbau 940x2, auf, Anordnung mit 80 epdm. Die Reifen gemäß der Erfindung hatten eine einzige Bandagenlage mit einem erfindungsgemäß ausgeführten PET-Kord 10, Aufbau 1440x2, ausgeführt mit 100 epdm. In der nachstehenden Tabelle 1 sind die Testergebnisse zusammenfassend dargestellt. Ermittelt bzw. getestet wurden die Lebensdauer, die Hochgeschwindigkeitshaltbarkeit, der Flatspoteffekt, der Rollwiderstand und die Steifigkeit bei Kurvenfahrt. Des weiteren wurden die Herstellkosten der Bandagenlagen miteinander verglichen. Die mit den Reifen gemäß der Stand der Technik ermittelten Testergebnisse wurden 100 gesetzt, die mit den Reifen gemäß der Erfindung erzielte Verbesserung zeigt sich in einem Wert größer als 100, wobei beispielsweise der in der Tabelle 1 beim Flatspoteffekt angegebene Wert von 115 bedeutet, dass die erfindungsgemäßen Reifen um 15 % besser waren.

**Tabelle 1**

| | PA 6.6, 940x2, 80 epdm zweilagig | PET, 1440x2, 100 epdm einlagig |
|---|---|---|
| Lebensdauer | 100 | 100 |
| Hochgeschwindigkeitshaltbarkeit | 100 | 100 |
| Flatspoteffekt | 100 | 115 |
| Rollwiderstand | 100 | 104 |
| Steifigkeit bei Kurvenfahrt | 100 | 105 |
| Kosten der Bandage | 100 | 135 |

### Bezugszeichenliste

- 1: Laufstreifen
- 2: Seitenwand
- 3: Wulstbereich
- 4: Wulstkern
- 5: Wulstprofil
- 6: Karkasslage
- 7: Innenschicht
- 8: Gürtelverband
- 8a: Gürtellage
- 8b: Gürtellage
- 9: Bandagenlage
- 10: PET-Kord

## Patentansprüche

1. Fahrzeugluftreifen radialer Bauart mit einem Laufstreifen (1), einer Radialkarkasse, einem Gürtelverband (8) mit mindestens zwei Gürtellagen (8a, 8b) und mit zumindest einer Gürtelbandagenlage (9), die radial außerhalb des Gürtels angeordnet ist und durch ein kontinuierliches und spiralförmiges Wickeln eines PET-Kordes (10) in der Umfangsrichtung des Reifens gebildet ist,
**dadurch gekennzeichnet,**
**dass** der PET-Kord (10) bei einer Kraft von 1,56 cN/detx bei 20°C eine Dehnung von 3% bis 5 % und bei 160°C eine Dehnung von 7% bis 9 % aufweist,
**dass** die Summe aus der Bruchdehnung des PET-Kordes (10) und der Wärmeschrumpfung, ermittelt bei 180°C, bei einer Vorspannkraft von 0,01 cN/dtex und einer Wirkungsdauer von zwei Minuten, größer ist als 20 %,
und **dass** der PET-Kord (10) eine Wärmeschrumpfung, ermittelt bei 180 °C, bei einer Vorspannkraft von 0,01 cN/dtex und einer Wirkungsdauer von zwei Minuten, größer als 2,5 % aufweist.

2. Fahrzeugluftreifen nach Anspruch 1, **dadurch gekennzeichnet, dass** der PET-Kord (10) eine Gesamtfeinheit zwischen 1000 dtex und 6000 dtex, insbesondere zwischen 1000 dtex und 2000 dtex, aufweist.

3. Fahrzeugluftreifen nach Anspruch 1, **dadurch gekennzeichnet, dass** der PET- Kord (10) einen Kordtwist zwischen 80 tpm und 500 tpm, insbesondere zwischen 250 tpm und 400 tpm, aufweist.

4. Fahrzeugluftreifen nach einem der Ansprüche 1 bis 3, **dadurch gekennzeichnet, dass** der PET-Kord (10) aus einem einzigen Garn besteht.

5. Fahrzeugluftreifen nach einem der Ansprüche 1 bis 4, **dadurch gekennzeichnet, dass** der PET-Kord (10) in der Bandagenlage (9) mit 60 epdm bis 120 epdm, insbesondere mit 80 epdm bis 100 epdm, angeordnet ist.

## Claims

1. Pneumatic vehicle tire of a radial design, with a tread (1), a radial carcass, a belt assembly (8) with at least two belt plies (8a, 8b) and with at least one belt bandage ply (9), which is arranged radially outside the belt and is formed by continuously and spirally winding a PET cord (10) in the circumferential direction of the tire, **characterized**
**in that** the PET cord (10) has under a force of 1.56 cN/detx an extension of 3% to 5% at 20°C and an extension of 7% to 9% at 160°C,
**in that** the sum of the elongation at break of the PET cord (10) and the thermal shrinkage, determined at 180°C, under a pretensioning force of 0.01 cN/dtex and with a duration of action of two minutes, is greater than 20%,
and **in that** the PET cord (10) has a thermal shrinkage, determined at 180°C, under a pretensioning force of 0.01 cN/dtex and with a duration of action of two minutes, greater than 2.5%.

2. Pneumatic vehicle tire according to Claim 1, **characterized in that** the PET cord (10) has a total fineness of between 1000 dtex and 6000 dtex, in particular between 1000 dtex and 2000 dtex.

3. Pneumatic vehicle tire according to Claim 1, **characterized in that** the PET cord (10) has a cord twist of between 80 tpm and 500 tpm, in particular between 250 tpm and 400 tpm.

4. Pneumatic vehicle tire according to one of Claims 1 to 3, **characterized in that** the PET cord (10) consists of a single yarn.

5. Pneumatic vehicle tire according to one of Claims 1 to 4, **characterized in that** the PET cord (10) is arranged in the bandage ply (9) with 60 epdm to 120 epdm, in particular with 80 epdm to 100 epdm.

## Revendications

1. Bandage pneumatique pour roue de véhicule, à structure radiale et présentant une bande de roulement (1), une carcasse radiale, un ensemble de ceinture (8) doté d'au moins deux couches de ceinture (8a, 8b) et d'au moins une couche (9) de bandage de ceinture disposée radialement à l'extérieur de la ceinture et formée en enroulant en continu et en spirale un câble (10) en PET dans la direction périphérique du bandage de roue,
**caractérisé en ce que**
sous une force de 1,56 cN/dtex et à 20°C, le câble (10) en PET présente un allongement de 3 % à 5 % et à 160°C un allongement de 7 % à 9 %,
**en ce que** la somme de l'allongement à la rupture du câble (10) en PET et du retrait thermique déterminé à 180°C sous une force de précontrainte de 0,01 cN/dtex et une durée efficace de deux minutes est supérieure 20 % et
**en ce que** sous une force de précontrainte de 0,01 cN/dtex et une durée d'action de deux minutes, le câble (10) en PET présente à 180°C un retrait thermique supérieur à 2,5 %.

2. Bandage pneumatique pour roue de véhicule selon la revendication 1, **caractérisé en ce que** le câble (10) en PET présente une finesse globale comprise entre 1 000 dtex et 6 000 dtex et en particulier entre 1 000 dtex et 2 000 dtex.

3. Bandage pneumatique pour roue de véhicule selon la revendication 1, **caractérisé en ce que** le câble (10) en PET présente un torsadage compris entre 80 tpm et 500 tpm et en particulier entre 250 tpm et 400 tpm.

4. Bandage pneumatique pour roue de véhicule selon l'une des revendications 1 à 3, **caractérisé en ce que** le câble (10) en PET est constitué d'un seul fil.

5. Bandage pneumatique pour roue de véhicule selon l'une des revendications 1 à 4, **caractérisé en ce que** le câble (10) en PET est disposé dans la couche de bandage (9) à entre 60 epdm et 120 epdm et en particulier à entre 80 epdm et 100 epdm.
